# EUROPEAN PATENT SPECIFICATION

(11) **EP 1 738 885 B1**
(45) Date of publication and mention of the grant of the patent: **14.05.2014**
(21) Application number: 06397009.9
(22) Date of filing: 09.06.2006
(51) Int. Cl.: B28D 1/14, B28B 11/12, B23B 39/00

(54) **Method and apparatus for drilling drainage holes**
Verfahren und Vorrichtung zum Bohren von Drainagelöchern
Procédé et dispositif pour percer des trous de drainage

(30) Priority: 01.07.2005 FI 20050701
(43) Date of publication of application: 03.01.2007
(73) Proprietor: Elematic Oy Ab, 37801 Toijala (FI)
(72) Inventor: SANDQVIST, Leo, FI-30100, Forssa (FI); JÄRVINEN, Lassi, FI-37600, Valkeakoski (FI); SEPPÄNEN, Aimo, FI-37700, Sääksmäki (FI)
(74) Representative: Berggren Oy Ab

(56) References cited:
- EP-A1- 0 455 495
- EP-A2- 0 940 236
- FI-B- 82 631

## Description

The present invention relates to drilling of drainage holes to concrete products equipped with hollow-cores. More specifically, the present invention relates to a method according to the preamble of claim 1 and an apparatus according to the preamble of claim 4 for drilling water drainage holes to hollow-core concrete products, in which the hollow cores are at least partly closed. Such a method and such an apparatus are known from EP 0 940 236 and EP 0 455 495 respectively.

Prestressed hollow-core slabs cast of concrete by using slipforming process are commonly used in the building technology. Water drainage holes must be drilled to the lower surfaces of the hollow cores of the hollow-core slabs in order to remove the condense water accumulated inside the hollow cores due to temperature changes, for example.

The water drainage holes are drilled to the lower surface at the end portions of the slab. European patent publication EP 0 940 236 discloses a method and an apparatus for drilling drainage holes, wherein the water drainage holes are drilled to the slab by means of drilling machines connected to lifting tongs fixed to a lifting boom of a crane, when transferring the slab from the casting bed by means of the lifting tongs of the crane. According to the solution of the publication, the drilling of the water drainage holes to the area of the slab ends can be performed simultaneously with the transfer of the slab.

Nowadays, however, different cavities, embeddings and apertures are formed, or lifting lugs etc. are fixed to the hollow-core slabs, causing the need to cast the hollow-cores of the hollow-core slab closed at one or more points of the length of the hollow-core slab. Thereby, the water accumulated in the hollow cores cannot be conducted away through the drainage holes, but stays in the closed portion of the cavity. Later, for example when the building is ready, the water can penetrate the lower surface of the slab and damage the ceiling construction and/or the surfaces thereof.

The weakness and the problems of the drainage holes known in the art are evident particularly with these special slabs, where water drainage holes are needed also elsewhere than at the ends of the slab.

In the present invention, the hardened hollow-core slabs cut to the desired length are lifted to a drainage hole drilling station by means of a lifting boom. The slab is picked up by lifting tongs of the lifting boom at a point close to the end of the slab, substantially at the point of the end, where the drainage holes are supposed to be drilled. The lifting boom is equipped with sensors that define the mutual distance of the lifting tongs. The data about the distance is forwarded to the drilling station during the lifting and the transfer of the slab. The drilling station according to the invention comprises two separate parts that can be moved with respect to each other, and the mutual difference between the different parts can thus be adjusted to correspond to the length of the slab to be drilled. Both parts of the drilling station comprise a desired amount of drilling units, by means of which the water drainage holes are drilled to the lower surface of the slab. The drilling station further comprises a part equipped with a movable drilling unit moving between the end parts of the drilling station for drilling drainage holes to the hollow cores at the closed portions thereof. The movable drilling station is preferably controlled by means of the design parameters of the slab, whereby the movable drilling station drills the drainage holes for the closed hollow cores at the designed places between the ends of the slab.

More specifically, the method according to the invention is characterized by what is stated in the characterizing part of Claim 1, and the apparatus according to the invention is characterized by what is stated in the characterizing part of Claim 4. Preferred embodiments of the invention are disclosed by the dependent claims.

The invention will be described in more detail in the following by means of example, with reference to the enclosed drawings, wherein
Figure 1 shows a schematic side view of one drilling station according to the present invention.
Figure 2 shows a schematic view of the location of the drilling units in the end parts of the drilling station of Figure 1, and
Figure 3 shows a schematic view of the location of the movable drilling unit in the intermediate part of the drilling station of Figure 1.

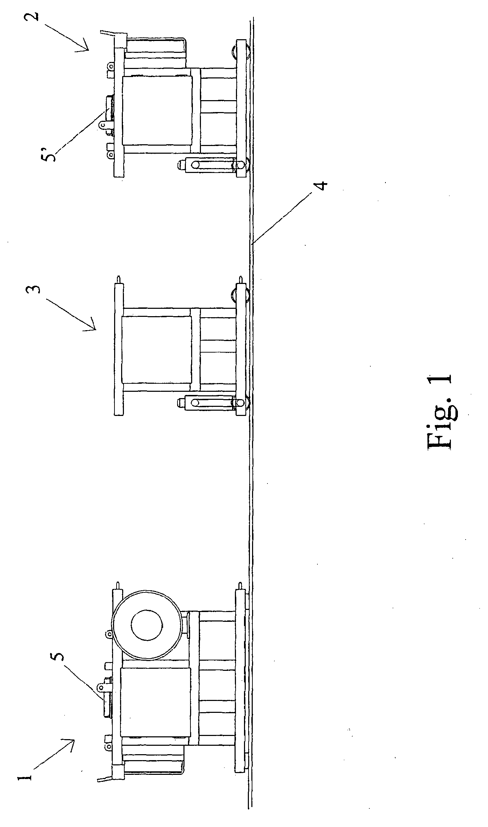

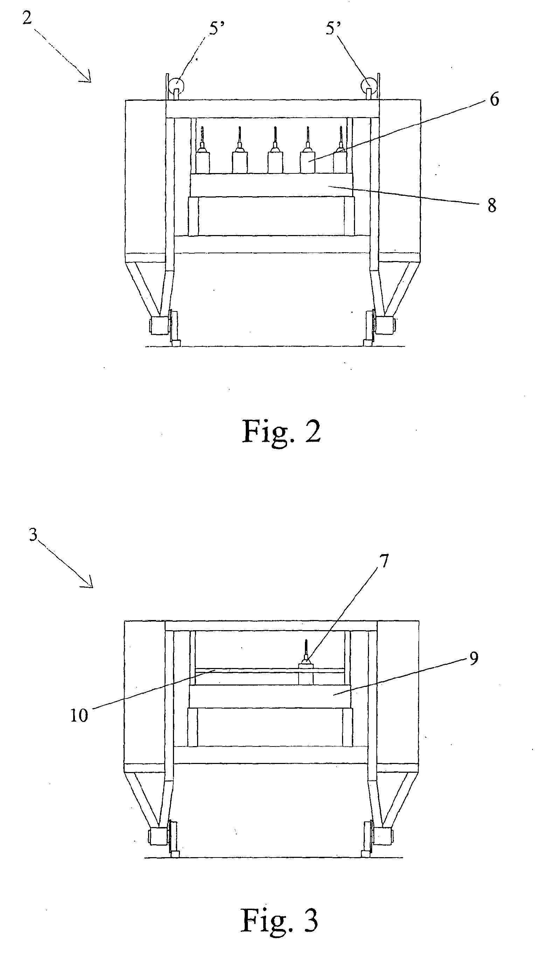

The drilling station according to the present invention shown in Figure 1 comprises two end parts 1, 2, the first end part 1 being stationary and the second end part 2 being movable. An intermediate part 3 comprising a movable drilling unit 7 (Figure 3) is placed between the end parts.

When the hollow-core slab cut to the desired length is lifted from the casting bed by means of lifting tongs of a lifting boom, the lifting tongs are set to the ends of the hollow-core slab substantially at those points, where the drainage holes are supposed to be drilled. In connection with the lifting tongs there is placed a distance sensor defining the mutual distance of the lifting tongs. This distance information is supplied to the drilling station, based on which the second, movable end part 2 of the drilling station moves for example along rails 4 to the distance from the first, stationary end part 1 of the drilling station defined by the distance information. Said moving is performed during the lifting and transfer of the hollow-core slab to the drilling station.

After the hollow-core slab is transferred, the slab is lowered onto the end parts 1, 2 having been set at the right distance from each other. The hollow-core slab is centered by means of control rolls 5, 5' of the end parts 1 and 2. When the slab is lowered to its place in the drilling station, the drainage holes are drilled by means of the drilling units 6 (Figure 2) located in the end parts 1 and 2 of the drilling station, to the ends of the slab, to the lower surface of the slab facing the drilling station at the places of the hollow-cores of the slab. Advantageously as many drilling units are placed parallel to the end parts 1 and 2, as there are hollow-cores in the slab to be drilled.

At the same time when drainage holes are drilled to the ends of the slab, the intermediate part 3 moves together with the movable drilling unit 7 (Figure 3), drilling the required drainage holes to the closed hollow cores of the slab. The movable drilling unit 7 together with the intermediate part 3 is controlled based on the design data of the slab, where the places for the additional drainage holes of the closed hollow cores are marked. The longitudinal motion of the movable drilling unit is effected by moving the intermediate part 3 along tracks 4 under the slab resting on the end parts 1 and 2 of the drilling station. The movable drilling unit is attached to the intermediate part 3 transversally with respect to the slab by means of guides, supported by which the movable drilling unit can move in the transversal direction of the slab.

Figure 2 shows schematically the position of the drilling units 6 in the movable end part 2. The drilling units 6 are fixed to a support 8 movable in the vertical dimension within the end part 2, said support 8 being moved for example by means of hydraulic cylinders (not shown) or some other solution providing a linear motion. Drilling units 6 are advantageously located parallel in the support 8 moving in the vertical direction, but if the size of the drilling units does not allow the parallel positioning, the drilling units can also be placed on two different levels in the longitudinal direction of the drilling station. The placing of the drilling units can be changed corresponding to the eventually varying number of hollow cores and the places of the hollow cores. The stationary end part of the drilling station also comprises a corresponding arrangement.

When the hollow-core slab is placed into the drilling station, the drilling units 6 are switched on and the supports 8 start to be lifted at the both end part 1 and 2 of the drilling station, whereby the bits of the drilling units 6 raise onto the level of the upper surfaces of the end parts 1 and 2 and start to drill to the lower surface of the hollow-core slab, when the lifting of the drilling unit continues. After the drilling of drainage holes to the end parts of the slab is completed, the supports 8 together with the drilling units 6 are lowered down and the drilling units are switched off.

At the same time when the drilling of the drainage holes to the end parts of the slabs starts, the intermediate part 3 of the drilling station comprising a movable drilling unit 7 shown in Figure 3 finds its way to the first place determined based on the design data of the slab, whereby the movable drilling unit 7 is positioned to the right place in the longitudinal direction of the slab. The drilling unit movable in the transversal direction with respect to the longitudinal direction of the slab is moved in place for example by means of a guide 10, said guide 10 being for example a solution based on ball-race screw. When the positioning of the movable drilling unit is completed, the drilling of the drainage holes can be started by switching on the movable drilling unit and by starting to lift the support 9. The other drainage holes along the length of the slab are drilled correspondingly.

After all the required drainage holes are drilled, the drilling station informs that the drilling is completed for example with acoustic and/or a light signals, so as to allow the slab to be removed from the drilling station, after which the drilling station is ready for drilling of a new slab.

With the solution according to the invention, all the necessary drainage holes can be drilled to the hollow-core slab simultaneously, when the slab is resting on the drilling station, including the drainage holes of the closed hollow cores of special slabs in the required places on the area of the surface of the slab.

## Claims

1. A method for drilling water drainage holes into a concrete hollow-core slab, whereby a hollow-core slab cast or cut by sawing into the final length is lifted and transferred by means of lifting elements of a lifting boom from the casting bed to a separate station and whereby the drainage holes are drilled to the lower surface of the hollow core slab substantially on the area of the end parts of the slab at the places of the hollow cores, **characterized in that** in said method
- said separate station is a drilling station (1, 2, 3) in which said drainage holes are drilled,
- the hollow-core slab is grabbed by lifting elements at the ends of the slab substantially at the points where the drainage holes will be drilled at the ends of the slab,
- the mutual distance of the lifting elements grabbed to the slab is determined, and the data about the distance is forwarded to the drilling station,
- the mutual distance of the end parts (1,2) of the drilling station, said end parts comprising the drilling units (6) for drilling the drainage holes to the opposite ends of the slab is determined based on the mutual distance of the lifting elements, and
- the end parts (1, 2) comprising the drilling units (6) for drilling the drainage holes to the opposite ends of the slab are moved to the determined distance from each other.

2. A method according to Claim 1, **characterized in that** in the method, the drainage holes required for the area of the length of the slab are drilled by means of a separate, movable drilling unit (7).

3. A method according to Claim 2, **characterized in that** the movable drilling unit (7) is controlled based on the design data of the slab.

4. An apparatus for drilling drainage holes to a concrete hollow-core slab, said apparatus comprising one or a plurality of drilling units (6) for drilling drainage holes to the lower surface of the slab substantially on the area ofthe end parts of the slab at the places ofthe hollow cores, and two end parts (1, 2) movable with respect to each other, the ends ofthe slab to be drilled being placed thereon for the duration of the drilling and the end parts comprising one or a plurality of drilling units (6) for drilling drainage holes to the lower surface of the hollow-core slab, as well as means (4) for moving the end parts to a distance from each other to be determined based on the length of the slab to be drilled, **characterized in that** the first end part (1) is stationary and the second end part (2) is movable, and the apparatus comprises an intermediate part (3) placed movably between the end parts, said intermediate part (3) comprising at least one drilling unit (7) for drilling drainage holes to the lower surface of the hollow-core slab.

5. An apparatus according to Claim 4, **characterized in that** at least one drilling unit (7) is placed in the intermediate part (3) so that it is movable in the transversal direction of the slab to be drilled.

6. An apparatus according to Claim 4 or 5, **characterized in that** the drilling units (6, 7) are placed in the apparatus so that they are movable in the vertical direction.

7. An apparatus according to any of the Claims from 4 to 6, **characterized in that** the apparatus comprises means for controlling the drilling unit (7) placed in the intermediate part (3) based on the design data of the slab.

8. An apparatus according to any of the Claims from 4 to 7, **characterized in that** the apparatus comprises means for moving the end parts (1, 2) with respect to each other and means for determining the mutual distance of the end parts (1, 2).

## Patentansprüche

1. Verfahren zum Bohren von Wasserablasslöchern in eine Beton-Hohlkernplatte, wodurch eine Hohlkernplatte, die in die Endlänge gegossen oder durch Sägen geschnitten ist, mittels von Hebeelementen eines Hebeschwenkarms von dem Gussbett zu einer separaten Station angehoben und übertragen wird und wodurch die Ablasslöcher an der unteren Fläche der Hohlkernplatte im Wesentlichen an dem Bereich der Endteile der Platte an den Stellen der Hohlkerne gebohrt werden, **dadurch gekennzeichnet, dass** in dem Verfahren
- die separate Station eine Bohrstation (1, 2, 3) ist, in der die Ablasslöcher gebohrt werden,
- die Hohlkernplatte durch Hebeelemente an den Enden der Platte im Wesentlichen an den Punkten ergriffen wird, an denen die Ablasslöcher an den Enden der Platte gebohrt werden,
- die gegenseitige Distanz der Hebeelemente, die die Platte greifen, ermittelt wird und die Daten über die Distanz an die Bohrstation geliefert werden,
- die gegenseitige Distanz der Endteile (1, 2) der Bohrstation, wobei die Endteile die Bohreinheiten (6) zum Bohren der Ablasslöcher an den entgegengesetzten Enden der Platte umfassen, auf Grundlage der gegenseitigen Distanz der Hebeelemente ermittelt wird, und
- die Endteile (1, 2), die die Bohreinheiten (6) zum Bohren der Ablasslöcher an den entgegengesetzten Enden der Platte umfassen, zu der ermittelten Distanz voneinander bewegt werden.

2. Verfahren nach Anspruch 1, **dadurch gekennzeichnet, dass** in dem Verfahren die Ablasslöcher, die für den Bereich der Länge der Platte erforderlich sind, mittels einer separaten bewegbaren Bohreinheit (7) gebohrt werden.

3. Verfahren nach Anspruch 2, **dadurch gekennzeichnet, dass** die bewegbare Bohreinheit (7) auf Grundlage der Konstruktionsdaten der Platte gesteuert wird.

4. Vorrichtung zum Bohren von Ablasslöchern an einer Beton-Hohlkernplatte, wobei die Vorrichtung eine oder eine Mehrzahl von Bohreinheiten (6) zum Bohren von Ablasslöchern an der unteren Fläche der Platte im Wesentlichen an dem Bereich der Endteile der Platte an den Stellen der Hohlkerne sowie zwei Endteile (1, 2) umfasst, die in Bezug zueinander bewegbar sind, wobei die Enden der Platte, die zu bohren sind, daran für die Dauer des Bohrens angeordnet sind und die Endteile eine oder eine Mehrzahl von Bohreinheiten (6) zum Bohren von Ablasslöchern an der unteren Fläche der Hohlkernplatte wie auch ein Mittel (4) zum Bewegen der Endteile zu einer Distanz voneinander umfassen, die auf Grundlage der Länge der zu bohrenden Platte ermittelt wird, **dadurch gekennzeichnet, dass** das erste Endteil (1) stationär ist und das zweite Endteil (2) bewegbar ist, und die Vorrichtung ein Zwischenteil (3) umfasst, das bewegbar zwischen den Endteilen angeordnet ist, wobei das Zwischenteil (3) zumindest eine Bohreinheit (7) zum Bohren von Ablasslöchern an der unteren Fläche der Hohlkernplatte umfasst.

5. Vorrichtung nach Anspruch 4, **dadurch gekennzeichnet, dass** zumindest eine Bohreinheit (7) in dem Zwischenteil (3) angeordnet ist, so dass sie in der Querrichtung der zu bohrenden Platte bewegbar ist.

6. Vorrichtung nach einem der Ansprüche 4 oder 5, **dadurch gekennzeichnet, dass** die Bohreinheiten (6, 7) in der Vorrichtung so angeordnet sind, dass sie in der vertikalen Richtung bewegbar sind.

7. Vorrichtung nach einem der Ansprüche 4 bis 6, **dadurch gekennzeichnet, dass** die Vorrichtung ein Mittel zum Steuern der Bohreinheit (7), die in dem Zwischenteil (3) angeordnet ist, auf Grundlage der Konstruktionsdaten der Platte umfasst.

8. Vorrichtung nach einem der Ansprüche 4 bis 7, **dadurch gekennzeichnet, dass** die Vorrichtung ein Mittel zum Bewegen der Endteile (1, 2) in Bezug zueinander sowie ein Mittel zum Ermitteln der gegenseitigen Distanz der Endteile (1, 2) umfasst.

## Revendications

1. Procédé pour percer des trous de drainage d'eau dans une dalle à âme creuse en béton, où une dalle à âme creuse moulée ou coupée par sciage à la longueur finale est relevée et transférée au moyen d'éléments de levage d'une poutre de levage du lit de coulée à une station séparée, et où les trous de drainage sont percés dans la surface inférieure de la dalle à âme creuse sensiblement sur la zone des partie d'extrémité de la dalle aux emplacements des âmes creuses, **caractérisé en ce que** dans ledit procédé
- ladite station séparée est une station de perçage (1, 2, 3) dans laquelle lesdits trous de drainage sont percés,
- la dalle à âme creuse est saisie par des éléments de levage aux extrémités de la dalle sensiblement aux points ou les trous de drainage seront percés aux extrémités de la dalle,
- la distance mutuelle des éléments de levage en prise avec la dalle est déterminée, et les données se rapportant à la distance sont transmises à la station de perçage,
- la distance mutuelle des partie d'extrémité (1, 2) de la station de perçage, lesdites parties d'extrémité comprenant les unités de perçage (6) pour percer les trous de drainage dans les extrémités opposées de la dalle, est déterminée sur la base de la distance mutuelle des éléments de levage, et
les parties d'extrémité (1, 2) comprenant les unités de perçage (6) pour percer les trous de drainage dans les extrémités opposées de la dalle sont amenées à la distance déterminée l'une de l'autre.

2. Procédé selon la revendication 1, **caractérisé en ce que** dans le procédé, les trous de drainage requis pour la zone de la longueur de la dalle sont percés au moyen d'une unité de perçage mobile, séparée (7).

3. Procédé selon la revendication 2, **caractérisé en ce que** l'unité de perçage mobile (7) est commandée sur la base de données de design de la dalle.

4. Appareil pour le perçage de trous de drainage dans une dalle à âme creuse en béton, ledit appareil comprenant une ou une pluralité d'unités de perçage (6) pour percer des trous de drainage dans la surface inférieure de la dalle sensiblement dans la zone des parties d'extrémité de la dalle aux emplacements des âmes creuses, et deux partie d'extrémité (1, 2) déplaçables l'une relativement à l'autre, les extrémités de la dalle à percer étant placées sur ceux-ci pendant la durée du perçage, et les parties d'extrémité comprenant une ou plusieurs unités de perçage (6) pour percer des trous de drainage dans la surface inférieure de la dalle à âme creuse, ainsi qu'un moyen (4) pour déplacer les parties d'extrémité à une distance l'une de l'autre qui sera déterminée sur la base de la longueur de la dalle à percer,
**caractérisé en ce que** la première partie d'extrémité (1) est stationnaire, et la deuxième partie d'extrémité (2) est mobile, et l'appareil comprend une partie intermédiaire (3) placée d'une manière mobile entre les parties d'extrémité, ladite partie intermédiaire (3) comprenant au moins une unité de perçage (7) pour le perçage de trous de drainage dans la surface inférieure de la dalle à âme creuse.

5. Appareil selon la revendication 4, **caractérisé en ce qu'**au moins une unité de perçage (7) est placée dans la partie intermédiaire (3) de sorte qu'elle est déplaçable dans la direction transversale de la dalle à percer.

6. Appareil selon la revendication 4 ou 5, **caractérisé en ce que** les unités de perçage (6, 7) sont placées dans l'appareil de telle sorte qu'elles sont déplaçables dans la direction verticale.

7. Appareil selon l'une quelconque des revendications 4 à 6, **caractérisé en ce que** l'appareil comprend des moyens pour la commande de l'unité de perçage (7) placés dans la partie intermédiaire (3) sur la base des données de design de la dalle.

8. Appareil selon l'une quelconque des revendications 4 à 7, **caractérisé en ce que** l'appareil comprend des moyens pour déplacer les parties d'extrémité (1, 2) l'une par rapport à l'autre, et des moyens pour déterminer la distance mutuelle des parties d'extrémité (1, 2).
